# EUROPEAN PATENT APPLICATION

(11) **EP 1 796 125 A2**
(43) Date of publication of application: **13.06.2007**
(21) Application number: 06256303.6
(22) Date of filing: 12.12.2006
(51) Int. Cl.: H01J 17/49

(54) **Display device**

(30) Priority: 12.12.2005 KR 20050121940
(71) Applicant: Samsung SDI Co., Ltd., Suwon-si, Gyeonggi-do (KR)
(72) Inventor: Park, Hyoung-Bin c/o Samsung SDI Co., Ltd, Yeongtong-gu Suwon-Si, Gyeonggi-do (KR); Son, Seung-Hyun c/o Legal & IP Team Samsung SDI Co., Ltd., Giheung-eup ,Yongin-si, Gyeonggi-do (KR); Jang, Sang-Hun c/o Samsung SDI Co., Ltd, Yeongtong-gu Suwon-Si, Gyeonggi-do (KR); Kim, Gi-Young c/o Samsung SDI Co., Ltd, Yeongtong-gu Suwon-Si, Gyeonggi-do (KR); Kim, Sung-Soo c/o Samsung SDI Co., Ltd, Yeongtong-gu Suwon-Si, Gyeonggi-do (KR); Lee, Seong-Eui c/o Legal & IP Team Samsung SDI Co., Ltd, Giheung-eup, Yongin-si, Gyeonggi-do (KR)
(74) Representative: Mounteney, Simon James

(57) **Abstract**

A display device comprising a first substrate (120) and a second substrate (110) facing each other with a plurality of discharge cells (114) therebetween, a plurality of first electrodes (121a,b) formed on an inner surface of the first substrate, a plurality of curved electron emission sources (126a,b) disposed on the inner side of the first substrate to correspond to the first electrodes, a discharge gas filled in the discharge cells, and light emitting layers (115) formed on inner walls of the discharge cells.

## Description

### BACKGROUND OF THE INVENTION

### Field of the Invention

The present embodiments relate to a display device, and more particularly, to a display device that can improve luminous efficiency and reduce a driving voltage.

### Description of the Related Art

Plasma display panels (PDPs) are display devices which display an image using an electrical discharge. PDPs have become popular due to their characteristics of high brightness and wide viewing angle. In PDPs, a gas discharge is generated between electrodes by voltages applied to the electrodes, and then visible light is emitted from a phosphor layer that is excited by ultraviolet (UV) rays created when the gas discharge is generated.

PDPs can be categorized as either a direct current (DC) type or an alternating current (AC) type according to their discharge mechanism. In DC PDPs, all electrodes are exposed to a discharge space and electric charges move directly between corresponding electrodes. In AC PDPs, at least one electrode is covered by a dielectric layer, and a discharge is generated by wall charges, not by the migration of electric charges between corresponding electrodes.

PDPs can also be categorized as either a facing discharge type or a surface discharge type according to the arrangement of their electrodes. In facing discharge PDPs, a pair of sustain electrodes are respectively disposed on an upper substrate and a lower substrate, and a discharge occurs in a direction perpendicular to the substrates. In surface discharge PDPs, a pair of sustain electrodes are disposed on the same substrate, and a discharge occurs in a direction parallel to the substrate.

Facing discharge PDPs have high luminous efficiency, but suffer from a drawback in that their phosphor layer is easily deteriorated by plasma. Therefore, surface discharge PDPs are mainly used.

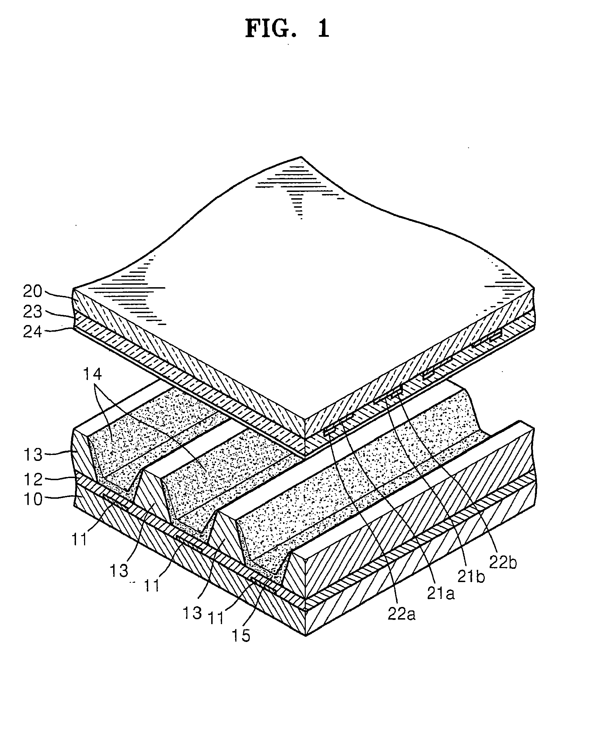

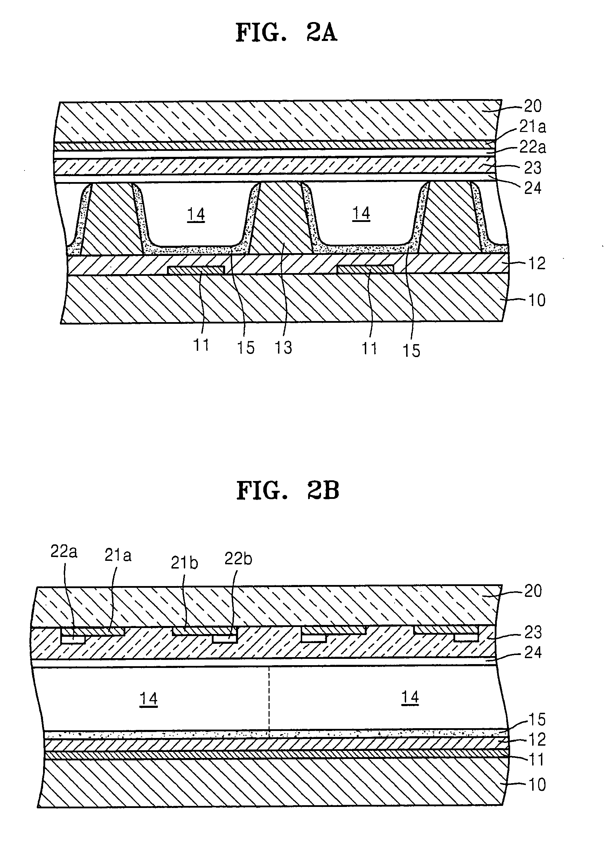

FIG. 1 is an exploded perspective view of a conventional surface discharge PDP. FIGS. 2A and 2B are respectively a horizontal cross-sectional view and a vertical cross-sectional view of the conventional surface discharge PDP of FIG. 1.

Referring to FIGS. 1, 2A, and 2B, the conventional PDP includes an upper substrate 20 and a lower substrate 10 which are spaced apart from each other by a discharge space in which a plasma discharge occurs.

A plurality of address electrodes 11 are arranged in stripes on a top surface of the lower substrate 10, and are covered by a first dielectric layer 12. A plurality of barrier ribs 13, which divide the discharge space to define a plurality of discharge cells 14 and prevent electrical and optical cross-talk between the discharge cells 14, are formed at predetermined intervals on a top surface of the first dielectric layer 12. Red (R), green (G), and blue (B) phosphor layers 15 are coated on inner walls of the discharge cells 14 to a predetermined thickness. A discharge gas is filled in the discharge cells 14.

The upper substrate 20 is a transparent substrate generally formed of glass through which visible light can be transmitted, and is coupled to the lower substrate 10 on which the barrier ribs 13 are formed. Stripe-shaped sustain electrodes 21a and 21b are arranged in pairs on a bottom surface of the upper substrate 20 to perpendicularly intersect the address electrodes 11. The sustain electrodes 21a and 21b are formed of transparent conductive materials, such as Indium Tin Oxide (ITO), through which visible light can be transmitted. In order to reduce the line resistance of the sustain electrodes 21a and 21b, bus electrodes 22a and 22b having smaller widths than those of the sustain electrodes 21a and 21b are formed on bottom surfaces of the sustain electrodes 21a and 21b. The sustain electrodes 21a and 21b and the bus electrodes 22a and 22b are covered by a transparent second dielectric layer 23. A protective layer 24 made of magnesium oxide (MgO) is formed on a bottom surface of the second dielectric layer 23.

In the conventional PDP constructed as described above, the protective layer 24 prevents the second dielectric layer 23 from being damaged by sputtering of plasma particles, and reduces a driving voltage by emitting secondary electrons. However, since the protective layer 24 formed of MgO has a low secondary electron emission coefficient, there is a limitation to sufficiently emit electrons into the discharge space.

Also, in the conventional PDP, a plasma discharge occurs when the discharge gas containing xenon (Xe) is ionized and then drops from its excited state, thereby emitting UV rays. Accordingly, in order to form an image, the conventional PDP requires energy high enough to ionize the discharge gas, and thus suffers from the disadvantages of a high driving voltage and low luminous efficiency.

### SUMMARY OF THE INVENTION

The present invention seeks to provide a display device that can improve luminous efficiency and reduce a discharge voltage.

According to a first aspect of the present invention, there is provided a display device as set out in claim 1. Preferred features of this aspect of the invention are set out in claims 2 to 13.

A second aspect of the invention provides a display device as set out in Claim 14. Preferred features of this aspect of the invention are set out in claims 15 to 23.

### BRIEF DESCRIPTION OF THE DRAWINGS

Embodiments of the invention will now be described by way of example and with reference to the accompanying drawings in which:

FIG. 1 is an exploded perspective view of a conventional plasma display panel (PDP);

FIGS. 2A and 2B are respectively a horizontal cross-sectional view and a vertical cross-sectional view of the conventional PDP of FIG. 1;

FIG. 3 is a cross-sectional view of a display device according to an embodiment of the invention;

FIG. 4 is a cross-sectional view of a modification of the display device of FIG. 3;

FIG. 5 is a cross-sectional view of another modification of the display device of FIG. 3;

FIG. 6 is a cross-sectional view of a display device according to another embodiment of the invention;

FIG. 7 is a cross-sectional view of a display device according to still another embodiment of the invention; and

FIG. 8 is a graph illustrating energy levels of xenon (Xe).

### DETAILED DESCRIPTION OF THE INVENTION

The present invention will now be described more fully with reference to the accompanying drawings, in which embodiments thereof are shown. Like reference numerals denote like elements in the drawings.

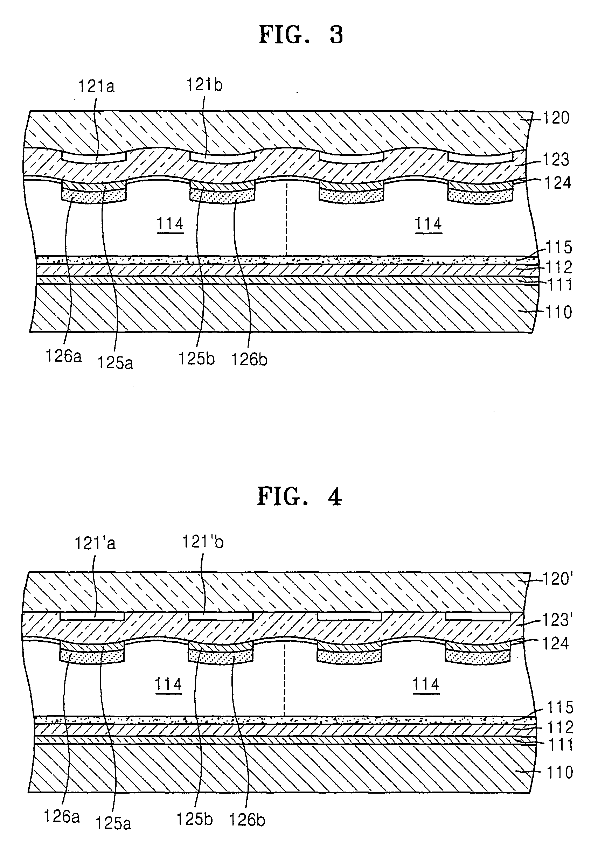

FIG. 3 is a partial cross-sectional view of a display device, e.g., a plasma display panel (PDP), according to an embodiment of the invention.

Referring to FIG. 3, an upper substrate 120, which is a first substrate, and a lower substrate 110, which is a second substrate, are spaced apart from each other with their surfaces facing each other. A plurality of discharge cells 114 where a plasma discharge occurs are formed between the upper substrate 120 and the lower substrate 110. Although not shown in FIG. 3, a plurality of barrier ribs, which divide a space between the upper substrate 120 and the lower substrate 110 to define the discharge cells 114 and prevent electrical and optical cross-talk between the discharge cells 114, are formed between the upper substrate 120 and the lower substrate 110.

The upper substrate 120 is generally a glass substrate through which visible light can be transmitted. The upper substrate 120 has a curved bottom surface in the present embodiment. A plurality of first electrodes is formed on the curved bottom surface of the upper substrate 120 to correspond to the discharge cells 114. The first electrodes include pairs of first and second sustain electrodes 121a and 121b which are arranged in parallel. The first and second sustain electrodes 121a and 121b may be formed of transparent conductive materials such, fore example, as Indium Tin Oxide (ITO). In order to reduce the line resistance of the first and second sustain electrodes 121a and 121b, bus electrodes (not shown) may be formed on bottom surfaces of the first and second sustain electrodes 121a and 121b. The bus electrodes with smaller widths than those of the first and second sustain electrodes 121a and 121b may be formed along edges of the first and second sustain electrodes 121a and 121b. The bus electrodes may be formed of a metal with high electrical conductivity such as, for example, aluminium (AI) or silver (Ag).

A first dielectric layer 123 is formed on the curved bottom surface of the upper substrate 120 to a predetermined thickness to cover the first and second sustain electrodes 121a and 121b. Accordingly, the first dielectric layer 123 has a curved bottom surface conforming to the bottom surface of the upper substrate 120. First and second electron emission sources 126a and 126b are formed on the curved bottom surface of the first dielectric layer 123 to correspond to the first and second sustain electrodes 121a and 121b. The first and second electron emission sources 126a and 126b are parallel to the first and second sustain electrodes 121a and 121b. The first and second electron emission sources 126a and 126b have curved shapes conforming to the curved bottom surface of the first dielectric layer 123. A height difference between the highest and lowest points of each of the curved electron emission sources 126a and 126b may be about 1 µm or more.

Although each of the first and second electron emission sources 126a and 126b is highest at a central portion and lowest along edge portions in FIG. 3, the present embodiment is not limited thereto. Each of the first and second electron emission sources 126a and 126b may be highest along edge portions and lowest at a central portion, may be shaped so that they have alternating highest and lowest portions, or may have other shapes. Although the first and second electron emission sources 126a and 126b are regularly curved, the present embodiment is not limited thereto and the first and second electron emission sources 126a and 126b may be irregularly curved.

First and second base electrodes 125a and 125b may be respectively formed between the first dielectric layer 123 and the first electron emission sources 126a and between the first dielectric layer 123 and the second electron emission sources 126b. The first and second base electrodes 125a and 125b may be formed of, for example, ITO, Al, or Ag.

As predetermined voltages are applied to the first and second sustain electrodes 121a and 121b, the first and second electron emission sources 126a and 126b accelerate and emit electrons into the discharge cells 114, thereby amplifying electron emission. The first and second electron emission sources 126a and 126b may be formed of, for example, oxidized porous silicon, carbon nanotube (CNT), diamond like carbon (DLC), or nanowire. The oxidized porous silicon can be oxidized porous polysilicon or oxidized porous amorphous silicon.

Protective layers 124 may be formed on the bottom surface of the first dielectric layer 123 between the electron emission sources 126a and 126b. The protective layers 124 prevent the first dielectric layer 123 from being damaged by sputtering of plasma particles, and reduce a driving voltage by emitting secondary electrons. The protective layers 124 can be formed, for example, of magnesium oxide (MgO).

The lower substrate 110 is generally a glass substrate. A plurality of second electrodes are formed on a top surface of the lower substrate 110. The second electrodes include address electrodes 111 intersecting the first and second sustain electrodes 121a and 121b. A second dielectric layer 112 is formed on the top surface of the lower substrate 110 to cover the address electrodes 111.

Red (R), green (G), and blue (B) light emitting layers 115 are coated on inner walls of the discharge cells 114 including a top surface of the second dielectric layer 112 and side walls of barrier ribs (not shown). The light emitting layers 115 are generally formed of photo-luminescent materials that generate visible light by being excited by ultraviolet (UV) rays. The light emitting layers 115 may further include cathode-luminescent materials or materials including quantum dots. A discharge gas that can generate UV rays during a discharge is filled in the discharge cells 114. The discharge gas may include, for example, xenon (Xe), nitrogen (N₂), deuterium (D₂), carbon dioxide (CO₂), hydrogen (H₂), carbon monoxide (CO), neon (Ne), helium (He), or argon (Ar).

In the PDP constructed as described above according to the present embodiment, if voltages of, for example, 10V and 0V are respectively applied to the first and second sustain electrodes 121a and 121b to cause a discharge, electric fields directed from the first sustain electrodes 121 a toward the second sustain electrodes 121b are formed in the discharge cells 114. Due to the electric fields, electrons are introduced from the second base electrodes 125b into the second electron emission sources 126b, accelerated by the second electron emission sources 126b, and then emitted into the discharge cells 114. If voltages of, for example, 0V and 10V are respectively applied to the first and second sustain electrodes 121a and 121b, accelerated electrons are emitted from the first electron emission sources 126a. In this regard, the PDP of the present embodiment can reduce a driving voltage and improve brightness and luminous efficiency because the first and second electron emission sources 126a and 126b emit the accelerated electrons into the discharge cells 114.

Also, since the first and second electron emission sources 126a and 126b of the present embodiment have curved shapes, electrons can be uniformly distributed over the discharge cells 114, and not concentrated on specific portions of the discharge cells 114, thereby further improving brightness and luminous efficiency. The paths of the electrons can be adjusted by allowing the first and second electron emission sources 126a and 126b to have various shapes.

FIG. 4 is a cross-sectional view of a modification of the display device of FIG. 3. An explanation will be made focusing on differences between it and the embodiment of FIG. 3. Referring to FIG. 4, pairs of first and second sustain electrodes 121'a and 121'b are formed on a flat bottom surface of an upper substrate 120'. A first dielectric layer 123' is formed on the flat bottom surface of the upper substrate 120' to cover the first and second sustain electrodes 121'a and 121'b. The first dielectric layer 123' has a curved bottom surface. First and second electron emission sources 126a and 126b are formed on the curved bottom surface of the first dielectric layer 123' to correspond to the first and second sustain electrodes 121'a and 121'b. The first and second electron emission sources 126a and 126b are parallel to the first and second sustain electrodes 121'a and 121'b. The first and second electron emission sources 126a and 126b have curved shapes conforming to the curved bottom surface of the first dielectric layer 123'. A height difference between the highest and lowest points of each of the curved electron emission sources 126a and 126b may be about 1 µm or more. The first and second electron emission sources 126a and 126b may have various curved shapes as described above. Although the first and second electron emission sources 126a and 126b are regularly curved in FIG. 4, the present embodiment is not limited thereto, and they may be irregularly curved. First and second base electrodes 125a and 125b may be respectively formed between the first dielectric layer 123' and the first electron emission sources 126a and between the first dielectric layer 123' and the second electron emission sources 126b.

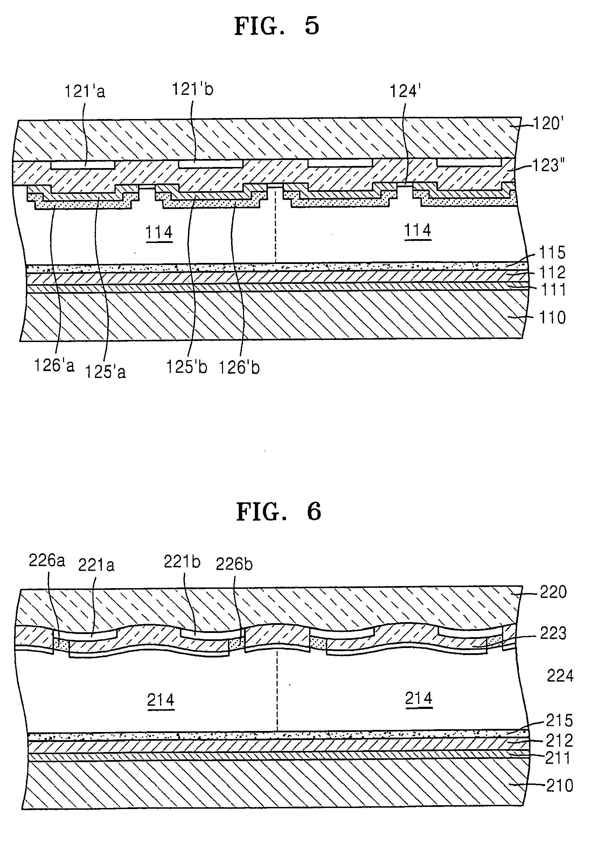

FIG. 5 is a cross-sectional view of another modification of the display device of FIG. 3. Referring to FIG. 5, a first dielectric layer 123" has a linearly curved bottom surface, unlike the first dielectric layer 123' of FIG. 4. First and second electron emission sources 126'a and 126'b formed on the linearly curved bottom surface of the first dielectric layer 123" have linearly curved shapes conforming to the linearly curved bottom surface of the first dielectric layer 123". First and second base electrodes 125'a and 125'b may be respectively formed between the first dielectric layer 123" and the first electron emission sources 126'a and between the first dielectric layer 123" and the second electron emission sources 126'b. Protective layers 124' may be formed on the bottom surface of the first dielectric layer 123" between the first and second electron emission sources 126'a and 126'b.

FIG. 6 is a partial cross-sectional view of a display device, e.g., a PDP, according to another embodiment. An explanation will be made focusing on differences between it and the embodiment of FIG. 3.

Referring to FIG. 6, an upper substrate 220, which is a first substrate, and a lower substrate 210, which is a second substrate, are spaced apart from each other with their surfaces facing each other. A plurality of discharge cells 214 are formed between the upper substrate 220 and the lower substrate 210. The upper substrate 220 has a curved bottom surface. A plurality of first electrodes are formed on the curved bottom surface of the upper substrate 220 to correspond to the discharge cells 214. The first electrodes include pairs of first and second sustain electrodes 221a and 221b which are arranged in parallel. The first and second sustain electrodes 221a and 221b have curved shapes conforming to the curved bottom surface of the upper substrate 220. First and second electron emission sources 226a and 226b are formed on curved bottom surfaces of the first and second sustain electrodes 221a and 221b, respectively. The first and second electron emission sources 226a and 226b may have widths less than those of the first and second sustain electrodes 221a and 221b. Since the first and second sustain electrodes 221a and 221b have curved bottom surfaces, the first and second electron emission sources 226a and 226b have curved shapes conforming to the first and second sustain electrodes 221a and 221b. A height difference between the highest and lowest points of each of the curved electron emission sources 226a and 236b may be about 1 µm or more. The first and second electron emission sources 226a and 226b may have various curved shapes as described above. Bus electrodes (not shown) may be respectively formed between the first sustain electrodes 221a and the first electrode emission sources 226a and between the second sustain electrodes 221b and the second electron emission sources 226b to reduce the line resistance of the first and second sustain electrodes 221a and 221b.

As predetermined voltages are applied to the first and second sustain electrodes 221a and 221b, the first and second electron emission sources 226a and 226b accelerate and emit electrons into the discharge cells 214 to amplify electron emission as described above. The first and second electron emission sources 226a and 226b may be formed of, for example, oxidized porous silicon, CNT, DLT, or nanowire. The oxidized porous silicon can be oxidized porous polysilicon or oxidized porous amorphous silicon.

First dielectric layers 223 are formed on the curved bottom surface of the upper substrate 220 to a predetermined thickness to expose bottom surfaces of the first and second electron emission sources 226a and 226b. Protective layers 224 are formed on bottom surfaces of the first dielectric layers 223. The protective layers 224 can be formed of, for example, MgO.

A plurality of second electrodes are formed on a top surface of the lower substrate 210. The second electrodes include address electrodes 211 intersecting the first and second sustain electrodes 221a and 221b. A second dielectric layer 212 is formed on the top surface of the lower substrate 210 to cover the address electrodes 211. Red (R), green (G), and blue (B) light emitting layers 215 are formed on inner walls of the discharge cells 214. A discharge gas for generating UV rays during a discharge is filled in the discharge cells 214.

Although the curved electron emission sources are applied to the surface discharge PDPs in the above embodiments, the present embodiments are not limited thereto, and the curved electron emission sources can be applied to facing discharge PDPs and flat lamps which are generally used as backlight units for liquid crystal displays (LCDs).

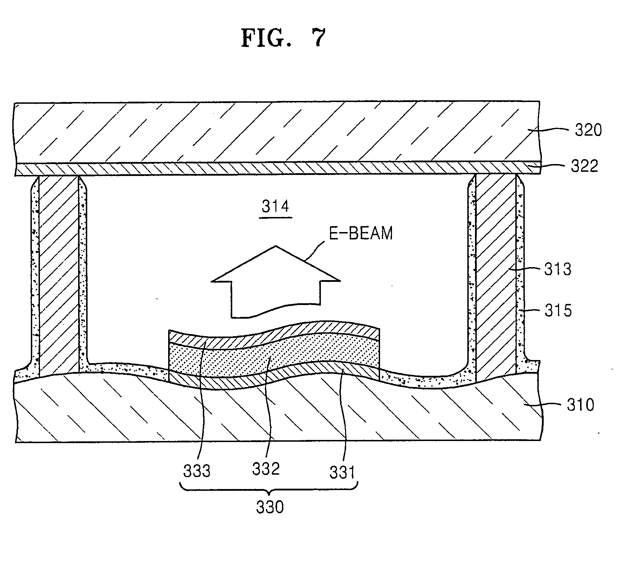

FIG. 7 is a partial cross-sectional view of a display device according to another embodiment.

Referring to FIG. 7, an upper substrate 320, which is a first substrate, and a lower substrate 310, which is a second substrate, face each other with a predetermined distance therebetween. In general, each of the upper substrate 320 and the second lower substrate 310 may be a glass substrate. A plurality of barrier ribs 313 are disposed between the upper substrate 320 and the lower substrate 310. The barrier ribs 313 divide a space between the upper substrate 320 and the lower substrate 310 to define a plurality of light emitting cells 314 and prevent electrical and optical cross-talk between the light emitting cells 314. An excitation gas for generating UV rays is filled in the light emitting cells 314. Part of the excitation gas may act as a discharge gas in the present embodiment. The excitation gas may include, for example, Xe, N₂, D₂, CO₂, H₂, CO, Ne, He, or Ar. Red (R), green (G), and blue (B) light emitting layers 315 are coated on inner walls of the light emitting cells 314. The light emitting layers 315 are generally formed of photo-luminescent materials that generate visible light by being excited by UV rays. The light emitting layers 315 may further include cathode-luminescent materials or materials including quantum dots.

In the present embodiment, the lower substrate 310 has a curved top surface. Electron emitting means 330 for emitting electrons into the light emitting cells 314 to excite the excitation gas are formed on the curved top surface of the lower substrate 310. The electron emitting means 330 have curved shapes conforming to the curved top surface of the lower substrate 310. A height difference between the highest and lowest points of each of the curved electron emitting means 330 may be about 1 µm or ore. The electron emitting means 330 may have various curved shapes, or may have linearly curved shapes. Although the electron emitting means 330 are regularly curved in FIG. 7, they may be irregularly curved.

Each of the electron emitting means 330 includes a first electrode 331 formed on the curved top surface of the lower substrate 310, an electron acceleration layer 332 formed on a top surface of the first electrode 331, and a second electrode 333 formed on a top surface of the electron acceleration layer 332. The electron acceleration layer 332 is formed of a material that accelerates and emits electrons into each of the light emitting cells 314. The electron acceleration layer 332 may be formed of, for example, oxidized porous silicon, CNT, DLC, or nanowire. The oxidized porous silicon can be oxidized porous polysilicon or oxidized porous amorphous silicon.

In the above structure, if predetermined voltages are applied to the first electrodes 331 and the second electrodes 333, electrons are introduced from the first electrodes 331 into the electron acceleration layers 332, accelerated by the electron acceleration layers 332, and then emitted into the light emitting cells 314 through the second electrodes 333. When voltages V₁ and V₂ are respectively applied to the first electrodes 331 and the second electrodes 333, V₁<V₂ may be satisfied. The electrons emitted into the light emitting cells 314 excite the excitation gas, and the excitation gas generates UV rays when stabilizing. The UV rays excite the light emitting layers 315 to generate visible light, and the visible light is emitted through the upper substrate 320 to form an image.

The electrons emitted into the light emitting cells 314 by the electron emitting means 330 may have energy greater than required to excite the excitation gas and less than required to ionize the excitation gas. Accordingly, voltages are applied to the first electrode 331 and the second electrode 333 so that the electrons emitted into the light emitting cells 314 by the electron emitting means 330 can have optimized electron energy to excite the excitation gas.

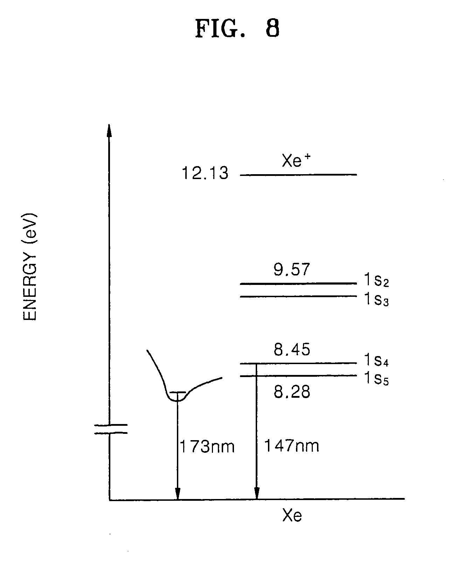

FIG. 8 is a graph illustrating energy levels of Xe which is an example of a source for generating UV rays. Referring to FIG. 8, an energy of 12.13 eV is required to ionize the Xe, and an energy of 8.28 eV or more is required to excite the Xe. For example, 8.28 eV, 8.45 eV, and 9.57 eV are required to excite the Xe to states 1S₅, 1S₄, and 1S₂, respectively. The excited Xenon Xe* generates UV rays of about 147 nm as it stabilizes. When the excited Xenon Xe* collides with the Xe in a ground state, eximer Xenon Xe₂* is generated. The eximer Xenon Xe₂* generates UV rays of about 173 nm while stabilizing. Accordingly, when the Xe is used as the UV ray generating source in the present embodiment, the electrons emitted into the light emitting cells 314 by the electron emitting means 330 may have an energy of about 8.28 to about 12.13 eV to excite the Xe.

A plurality of third electrodes 322 may be formed on a bottom surface of the upper substrate 320 to intersect the electron emitting means 330. The voltages applied to the first electrodes 331, the second electrodes 333, and the third electrodes 322 are respectively V₁, V₂ and V₃ are applied in such a manner that, V₁<V₂<V₃. In this case, accelerated electrons are emitted into the light emitting cells 314 by the electron acceleration layers 332 due to the voltages V₁ and V₂ applied to the first electrodes 331 and the second electrodes 333, and then accelerated toward the third electrodes 322 due to the voltages V₂ and V₃ applied to the second electrodes 333 and the third electrodes 322, thereby exciting the excitation gas. Part of the excitation gas can be controlled to be in a discharge state by adjusting the voltage V₃ applied to the third electrodes 322. When voltages applied to the first electrodes 331, the second electrodes 333, and the third electrodes 322 are respectively V₁, V₂, and V₃, V₁<V₂, V₁<V₃ and V₂ is substantially equal to V₃.

As described above, since the electron emitting means 330 emit electrons having energy greater than that required to excite the excitation gas and less than that required to ionize the excitation gas, the display device of the present invention can operate at a lower driving voltage than a conventional PDP, and can improve luminous efficiency. Also, since the electron emitting means 330 have curved shapes, the electrons can be uniformly distributed over the light emitting cells 314 instead of being concentrated on specific portions of the light emitting cells 314, thereby further improving brightness and luminous efficiency.

The electron emitting means 330 is disposed on the lower substrate 310 in the above described embodiments, but the present invention is not limited thereto. Accordingly, the electron emitting means 330 may be disposed on the upper substrate 320 or on both the upper substrate 320 and the lower substrate 310. The electron emitting means 330 can also be applied to flat lamps which are generally used as backlight units for LCDs.

As described above, the display device according to the present invention has a number of advantages.

Since the curved electron emission sources uniformly emit accelerated electrons into the discharge cells, electron emission characteristics can be improved, a driving voltage of the display device can be reduced, and brightness and luminous efficiency can be improved.

Also, since the curved electron emitting means emit electrons having energy greater than that required to excite the excitation gas and less than that required to ionize the excitation gas, a display device according to the present invention can operate at a lower driving voltage than the conventional PDP, and brightness and luminous efficiency can be improved.

While the present invention has been particularly shown and described with reference to exemplary embodiments thereof, it will be understood by those of ordinary skill in the art that various changes in form and details may be made therein without departing from the scope of the invention as defined by the following claims.

## Claims

1. A display device comprising:
a first substrate and a second substrate facing each other with a plurality of discharge cells therebetween;
a plurality of first electrodes formed on an inner surface of the first substrate;
a plurality of curved electron emission sources disposed over the inner side of the first substrate corresponding to the first electrodes;
a discharge gas filled in the discharge cells; and
light emitting layers formed on inner walls of the discharge cells.

2. A display device according to claim 1, wherein the electron emission sources are formed of a material selected from the group consisting of oxidized porous silicon, carbon nanotube (CNT), diamond like carbon (DLC), and nanowire.

3. A display device according to claim2, wherein the oxidized porous silicon is oxidized porous polysilicon or oxidized porous amorphous silicon.

4. A display device of according to any preceding claim, further comprising a plurality of second electrodes formed on an inner surface of the second substrate.

5. A display device according to claim 4, wherein the first electrodes include pairs of sustain electrodes arranged in parallel, and the second electrodes include address electrodes intersecting the sustain electrodes.

6. A display device according to any preceding claim , wherein the said plurality of curved electron emission sources are situated on the said inner side of the first substrate.

7. A display device according to claim 6, wherein the electron emission sources are parallel to the first electrodes.

8. A display device according to claim 6 or 7, further comprising a dielectric layer formed between the first substrate and the electron emission sources and configured to cover the first electrodes.

9. A display device according to claim 8, wherein the first substrate has a curved inner surface, the first electrodes and the dielectric layer are formed on the curved inner surface of the first substrate, and the electron emission sources are formed on a curved surface of the dielectric layer.

10. A display device according to claim 8, wherein the dielectric layer is formed on a flat inner surface of the first substrate and has a curved inner surface, and the electron emission sources are formed on the curved inner surface of the dielectric layer.

11. A display device according to one of claims 8 to 10, further comprising base electrodes formed between the dielectric layer and the electron emission sources.

12. A display device according to one of claims 1 to 5, comprising:
a dielectric layer formed on the inner surface of the first substrate configured to expose surfaces of the first electrodes; wherein the said plurality of curved electron emission sources are disposed on the exposed surfaces of the first electrodes.

13. A display device according to claim 12, wherein the first substrate has a curved inner surface, and wherein the first electrodes and the dielectric layer are formed on the curved inner surface of the first substrate, and wherein the electron emission sources are formed on curved surfaces of the first electrodes.

14. A display device comprising:
a first substrate and a second substrate facing each other with a plurality of light emitting cells therebetween;
an excitation gas filled in the light emitting cells;
light emitting layers formed on inner walls of the light emitting cells; and
a plurality of curved electron emitting means disposed on an inner side of at least one of the first substrate and the second substrate, configured to emit electrons for exciting the excitation gas into the light emitting cells.

15. A display device according to claim 14, wherein the at least one of the first substrate and the second substrate has a curved inner surface, and the electron emitting means are disposed on the curved inner surface of the at least one substrate.

16. A display device according to claim 14 or 15, wherein the electrons emitted by the electron emitting means have energy greater than that required to excite the excitation gas and less than that required to ionize the excitation gas.

17. A display device according to one of claims 14 to 16, wherein each of the electron emitting means comprises:
a first electrode formed on the curved inner surface of the at least one substrate;
a second electrode spaced apart from the first electrode with their surfaces facing each other; and
an electron acceleration layer disposed between the first electrode and the second electrode, configured to accelerate and emit electrons into each of the light emitting cells when voltages are applied to the first electrode and the second electrode.

18. A display device according to claim 17, wherein, when voltages respectively applied to the first electrodes and the second electrodes are V₁ and V₂, and wherein V₁< V₂.

19. The display device according to claim 17 or 18, wherein the electron acceleration layer is formed of one selected from the group consisting of oxidized porous silicon, CNT, DLC, and nanowire.

20. A display device according to claim 19, wherein the oxidized porous silicon is oxidized porous polysilicon or oxidized porous amorphous silicon.

21. A display device according to claim 17, 18, 19 or 20, further comprising third electrodes formed on an inner surface of the remaining one of the first substrate and the second substrate where the electron emitting means is not disposed.

22. A display device according to claim 21, wherein, when voltages respectively applied to the first electrodes, the second electrodes, and the third electrodes are V₁, V₂, and V₃, and wherein V₁ < V₂<V₃.

23. A display device according to claim 21, wherein, when voltages respectively applied to the first electrodes, the second electrodes, and the third electrodes are V₁, V₂, and V₃, and wherein V₁< V₂, V₁<V₃, and V₂ is substantially equal to V₃.
